# EUROPÄISCHE PATENTSCHRIFT

(11) **EP 0 461 386 B1**
(45) Veröffentlichungstag und Bekanntmachung des Hinweises auf die Patenterteilung: **20.04.1994**
(21) Anmeldenummer: 91107275.9
(22) Anmeldetag: 04.05.1991
(51) Int. Cl.: A01B 59/041, A01B 59/043, A01B 73/00, B60D 1/14, B60D 1/30

(54) **Schwenkvorrichtung für eine an die Dreipunktaufhängung eines Schleppers anbaubare Landmaschine**
Pivoting mechanism for an agricultural machine mountable on the three-point linkage of a tractor
Dispositif de pivotement pour une machine agricole attelable à l'accouplement à trois points d'un tracteur

(30) Priorität: 15.06.1990 DE 4019077
(43) Veröffentlichungstag der Anmeldung: 18.12.1991
(73) Patentinhaber: CLAAS SAULGAU GMBH, D-88340 Saulgau (DE)
(72) Erfinder: Deni, Franz, W-7968 Saulgau-Bogenweiler (DE)

(56) Entgegenhaltungen:
- EP-A- 0 161 610
- DE-A- 3 601 354

## Beschreibung

Die Erfindung bezieht sich auf eine Schwenkvorrichtung nach dem Gattungsbegriff des Anspruches 1.

Eine Schwenkvorrichtung dieser Art ist zum Beispiel in der DE-PS 3601354 dargestellt. Wenn Landmaschinen mit einer derartigen Schwenkvorrichtung betrieben werden, treten einige fahrmechanische Probleme auf, besonders bei der Fahrt in Hanglagen parallel oder senkrecht zu den Höhenschichtlinien:
1. Bei schneller Fahrt, besonders in leichteren Hanglagen, gerät die Landmaschine in Pendelschwingungen um ihre senkrechte Schwenkachse.
2. Bei Hangfahrt parallel zu einer Höhenschichtlinie triftet die Landmaschine hangabwärts und läuft dann schräg zur Fahrtrichtung.
3. Bei Hangabfahrt senkrecht zu den Höhenschichtlinien oder beim Rückwärtsstoßen schwenkt die Landmaschine um die horizontale Schwenkachse und bäumt sich dadurch auf.

Alle 3 Störungen können für sich allein oder in Kombination auftreten und stören den Betrieb nachhaltig. Für alle 3 Störungen sind in der Literatur auch auf den Einzelfall bezogene Abhilfe-Maßnahmen bekanntgeworden, z. B. in Form von Rückstellfedern oder von Reibungsdämpfern. Diese haben aber den Nachteil, daß sie nur im Einzelfall wirken oder daß sich ihre Wirkung gegenseitig beeinträchtigt. So können z. B. Reibungsdämpfer die Wirkung von Rückstellfedern vermindern oder die freie Verschwenkbarkeit einer abgetrifteten Landmaschine in die Soll-Lage kann erschwert werden.

Mit der Erfindung soll eine Schwenkvorrichtung geschaffen werden, mit der alle 3 genannten fahrmechanischen Probleme ohne gegenseitige Beeinträchtigung gelöst werden können.

Dies wird hinsichtlich der Problempunkte 1 und 2 dadurch bewirkt, daß die Reibungsbremsen, die auf ein Paar Koppelstangen wirken, nur in Richtung auf ein Zusammenschieben der Koppelstangen wirksam sind, während sie in der entgegengesetzten Richtung eine nahezu ungebremste Längsbewegung zulassen.

Nach einem weiteren wichtigen Erfindungsmerkmal sind parallel oder koaxial zu den Koppelstangen Druckfedern eingeschaltet, die einem Zusammenschieben der Koppelstangen entgegenwirken. Dadurch kann auch dem Problempunkt 3 abgeholfen werden.

Weitere vorteilhafte Merkmale für die Ausgestaltung der Erfindung ergeben sich aus den Ansprüchen 3 - 8.

Die Erfindung wird anhand von 6 Abbildungen beispielsweise beschrieben:

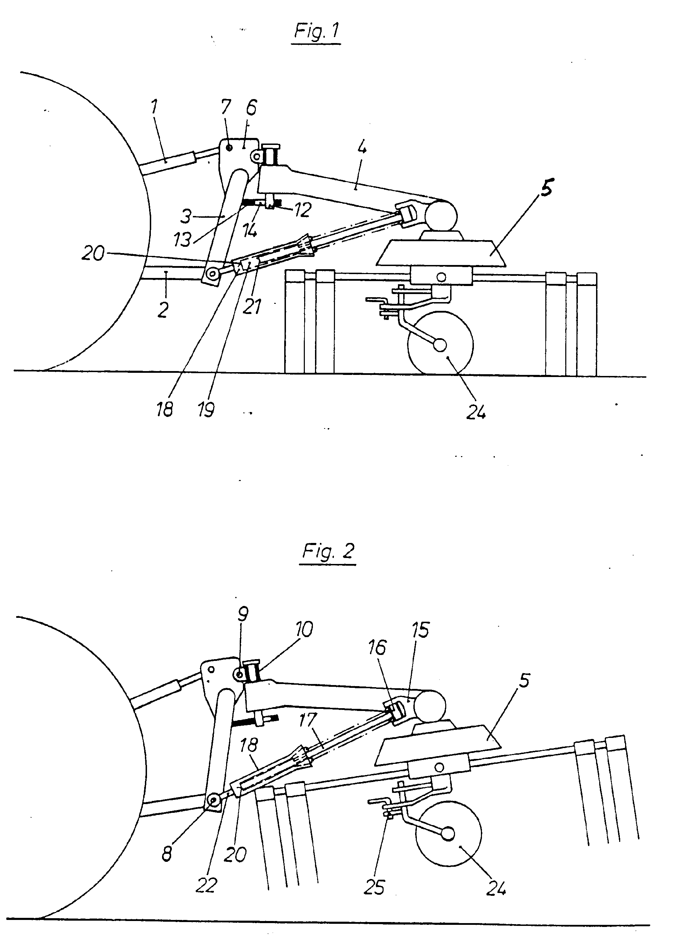

- Fig. 1: zeigt einen Kreiselschwader, an das Dreipunktgestänge eines Schleppers angebaut, in Arbeitsstellung als Seitenansicht.
- Fig. 2: zeigt die Maschine nach Figur 1 in Tansportstellung.
- Fig. 3: zeigt die Maschine nach Figur 1 in Draufsicht
- Fig. 4: zeigt ein Teleskopgestänge mit einer Reibungsbremse
- Fig. 5: zeigt einen Schnitt in Richtung A - A nach Figur 4
- Fig. 6: zeigt eine andere Ausführung eines Teleskopgestänges mit einer Reibungsbremse

Ein Schlepper ist mit einem aus Oberlenker (1) und Unterlenker (2) bestehenden Dreipunktgestänge ausgerüstet.

Der Kreiselschwader besteht aus den Hauptteilen Tragrahmen (3), Maschinengestell (4) und Arbeitskreiseln (5), die durch ein nicht dargestelltes Getriebe über eine Gelenkwelle vom Schlepper aus gegenläufig angetrieben werden. Der Tragrahmen (3) ist bügelförmig ausgebildet und besitzt oben Anbauplatten (6), die über einen Bolzen (7) mit dem Oberlenker (1) in Verbindung gebracht werden. Im unteren Bereich des Tragrahmens (3) erstrecken sich Anbauzapfen (8) quer zur Fahrtrichtung, die mit den Unterlenkern (2) verbunden werden. In den Anbauplatten (6) ist ein Bolzen (9) so gelagert, daß er als horizontale Schwenkachse für das Maschinengestell (4) dienen kann.

Der Bolzen (9) wird von einem Schwenkkopf (10) umschlossen, der oberhalb des Maschinengestells (4) angeordnet ist und der seinerseits eine etwa vertikale Bohrung (11) hat, die von einem vertikalen Bolzen (12) durchsetzt wird. Dieser Bolzen (12) steckt im Maschinengestell (4) und ragt nach unten aus ihm heraus. Mit dem Tragrahmen (3) fest verbunden ist eine Platte (13), die in ihrer Mittelebene ein Langloch (14) besitzt, durch das der vertikale Bolzen (12) durchgeführt ist.

Am Maschinengestell (4) sind zwei symmetrisch gelegene Anschlüsse (15). In ihnen sind in sogenannten Gummi-Metall-Blöcken (16) die oberen Enden von Teleskopstangen (17) gelagert. Diese können sich in Teleskophülsen (18), die Bohrungen (19) haben, in Längsrichtung bewegen. Ihre Bewegungsmöglichkeit nach innen wird dadurch begrenzt, daß die freien Enden (21) der Teleskopstangen (17) auf den Grund (20) der Bohrungen (19) stoßen. Die freien Enden (22) der Teleskophülsen (18) können entweder von außen oder von innen auf die Anbauzapfen (18) aufgesteckt werden.

Unterhalb der Arbeitskreisel (5) sind schwenkbare Nachlaufräder (24) angeordnet, deren Schwenkbeweglichkeit durch eine Feststellvorrichtung (25) ausgeschaltet werden kann.

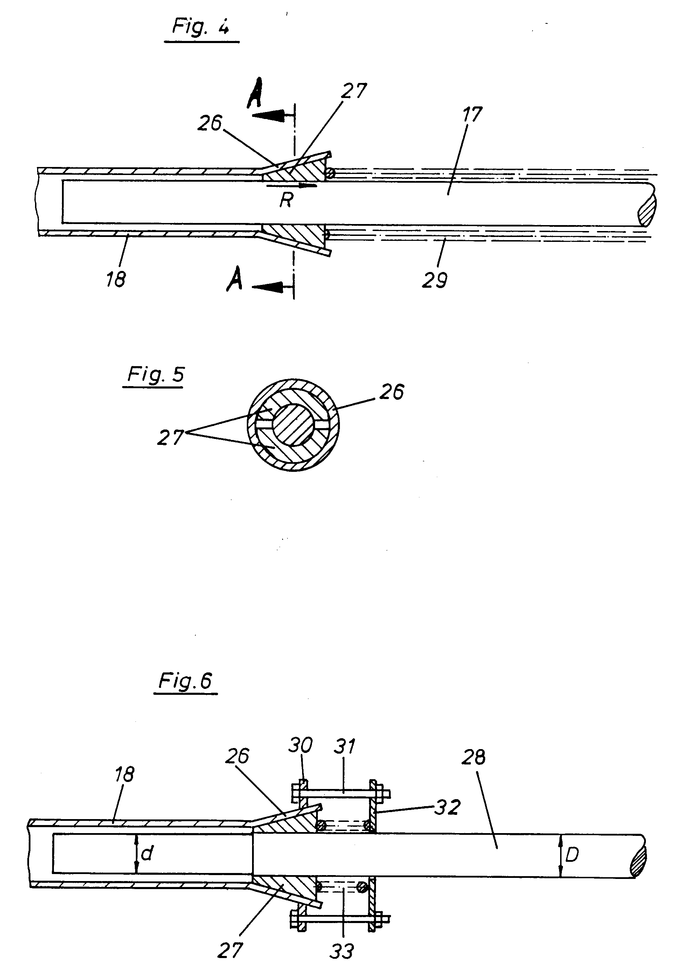

Die Teleskophülsen (18) haben an ihrem freien Ende eine trichterförmige Aufweitung (26) (Figuren 4 und 6). In die trichterförmige Aufweitung (26) ist eine zweigeteilte, aussen kegelförmige Büchse (27) eingelegt, deren zylindrische Bohrung von Teleskopstangen (17, 28) durchsetzt wird.

Bei einer Ausführungsform nach (Figur 4) ist eine Druckfeder (29) über die Teleskopstange (17) geschoben. Sie stützt sich an einem Ende an dem Anschluß (15) der Teleskopstange (17) und an ihrem anderen Ende an der Stirnfläche der Büchse (27) ab. Die Büchse (27) wird dadurch in die trichterförmige Aufweitung (26) gedrückt. Dabei wird die Büchse (27) zusammengedrückt und preßt sich gegen die Teleskopstange (17).

Bei eine anderen Ausführungsform nach (Figur 6) ist mit der trichterförmigen Aufweitung (26) ein Joch (30) fest verbunden. Es ist über Zuganker (31) mit einer Brücke (32) verbunden. Zwischen der Stirnfläche der Büchse (27) und der Brücke (32) ist eine vorgespannte Druckfeder (33) eingelegt. Bei dieser Ausführung ist eine Teleskopstange (28) gezeigt, die einen größeren Durchmesser (D) und einen kleineren Durchmesser (d) hat.

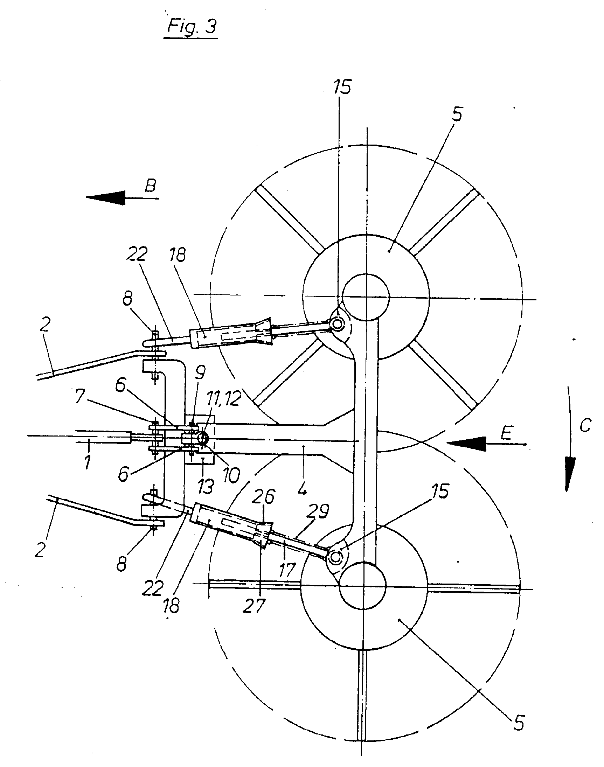

Bei Geradeausfahrt in Arbeitstellung bewegen sich Schlepper und Arbeitsmaschine in Richtung des Pfeiles (B) (Figur 3). Eine von außen einwirkende außermittige Störkraft versucht die Arbeitsmaschine beispielsweise in Richtung des Pfeiles (C) um die Hochachse (12) nach links (in Fahrtrichtung gesehen) zu verschwenken. Die linke Teleskopstange (17) wird dabei in die Teleskophülse (18) gegen die Wirkung der Druckfeder (29) eingeschoben. Außerdem wirkt dem Zusammenschieben eine Reibungskraft (R) (Figur 4) entgegen, die zwischen Büchse (27) und Teleskopstange (17) entsteht. Die rechte Teleskopstange (17) wird aus ihrer Teleskophülse (18) herausgezogen, was ohne Widerstand erfolgt, weil die Druckfeder (29) in dieser Richtung entspannt wird und dadurch die Reibungskraft (R) verschwindet. Wenn die außermittige Störkraft aufhört, kehrt sich das Kräftespiel an dem Teleskopgestänge (17, 18) um. Unter Mitwirkung der Druckfeder (29) wird die linke Teleskopstange (17) aus ihrer Teleskophülse (18) herausgezogen und die rechte Teleskopstange (17) gegen steigenden Widerstand in ihre Teleskophülse (18) eingeschoben. Es entsteht also ein rückdrehendes Moment, das der Bewegung in Richtung des Pfeiles (C) entgegenwirkt. Außerdem wird die Drehbewegung durch das Auftreten der Reibungskräfte (R) gedämpft, wodurch längere Schwingbewegungen unterdrückt werden.

Bei Geradeausfahrt hangabwärts oder beim Rückwärtsstoßen entsteht eine horizontal wirkende Längskraft in Richtung des Pfeiles (E). Diese Kraft versucht die Maschine um die hochliegende Querachse (9) zu drehen und die Maschine dadurch aufzubäumen. Dies wird dadurch unterdrückt, daß beide Teleskopstangen (17) in die Teleskophülsen (18) eingeschoben würden, was gegen den Widerstand der vorgespannten Druckfedern (29) erfolgen müßte.

Bei einer Ausführung nach (Figur 4) ändert sich die Spannung der Druckfeder (29) je nach dem, wie weit die Teleskopstange (17) in die Teleskophülse (18) eingeschoben ist. Damit ändert sich auch die Größe der Reibungskraft (R) bis herab zu der Größe O. Die Längenausdehnung der Druckfeder (29) kann durch nicht dargestellte Mittel so begrenzt werden, daß sie nicht mehr auf die Stirnfläche der Büchse (27) drückt, so bald die Teleskopstange (17) über ihre mittlere Ruhelage herausgezogen ist.

Bei einer Ausführung nach (Figur 6) wirkt die Druckfeder (33) immer mit gleicher Kraft auf die Büchse (27). Damit auch hier die Teleskopstange (28) ab ihrer Mittellage aus der Teleskophülse (18) ohne Reibungswiderstand herausgezogen werden kann, ist die Teleskopstange (28) im Durchmesser so abgesetzt, daß die Reibungsbremse unwirksam bleibt.

## Patentansprüche

1. Schwenkvorrichtung für eine mit mindestens einem Laufrad versehene, über einen Tragrahmen an die Dreipunktaufhängung eines Schleppers gelenkig anschließbare landwirtschaftliche Arbeitsmaschine, deren Maschinengestell in Arbeitsstellung der Maschine am Tragrahmen um eine etwa vertikale und eine horizontale, quer zur Fahrtrichtung liegende Achse frei schwenkbar und in ausgehobener Transportstellung nach Schwenken um die horizontale Achse über an ihm angeordnete Anschlagglieder durch deren Anlage an komplementären Anschlaggliedern am Tragrahmen selbstätig in einer in Fahrtrichtung ausgerichteten Lage festlegbar ist, wobei zwischen Maschinengestell und Tragrahmen symmetrisch zur Längs-Mittelachse zwei längenveränderliche Koppelstangen eingeschaltet sind, deren Längsbeweglichkeit durch Reibungsbremsen eingeschränkt ist, dadurch gekennzeichnet, daß die Reibungsbremsen (26, 27) an jeder Koppelstange (17, 18) nur in Richtung auf ein Zusammenschieben der Koppelstangen (17, 18) wirksam sind, während sie in der entgegengesetzten Richtung eine nahezu ungebremste Längsbewegung zulassen.

2. Schwenkvorrichtung nach Anspruch 1, dadurch gekennzeichnet, daß parallel oder koaxial zu den Koppelstangen (17, 18) Druckfedern (29) eingeschaltet sind, die einem Zusammenschieben der Koppelstangen (17, 18) entgegenwirken.

3. Schwenkvorrichtung nach den Ansprüchen 1 und 2, dadurch gekennzeichnet, daß die Druckfeder (29) sich mit einem Ende derart gegen eine Reibungsbremse (17, 26, 27) abstützt, daß deren Bremswirkung mit steigender Federspannung verstärkt wird.

4. Schwenkvorrichtung nach den Ansprüchen 1 - 3, dadurch gekennzeichnet, daß die Koppelstangen als Teleskopgestänge (17, 18) ausgebildet sind, bei dem ein Ende (26) der Teleskophülse (18) trichterförmig aufgeweitet ist, während die Teleskopstange (17) zylindrisch ist und daß in den Trichter (26) der Teleskophülse (18) eine geschlitzte oder zweiteilige, außen kegelige und mit einer zylindrischen Bohrung versehenen Büchse (27) eingelegt ist, die durch Wirkung einer Feder (29) in den Trichter (26) eingepreßt wird und die von der Teleskopstange (17) durchsetzt wird.

5. Schwenkvorrichtung nach Anspruch 4, dadurch gekennzeichnet, daß zum Einpressen der Büchse (27) die Feder (29) verwendet wird, die ihrerseits dem Zusammenschieben des Teleskopgestänges (17, 18) entgegenwirkt.

6. Schwenkvorrichtung nach Anspruch 4, dadurch gekennzeichnet, daß zum Einpressen der Büchse (27) eine Druckfeder (33) verwendet wird, die sich einerseits gegen die Stirnfläche der Büchse (27) und andererseits gegen eine mit der Teleskophülse (18) fest verbundenen Brücke (32) abstützt.

7. Schwenkvorrichtung nach den Ansprüchen 1 - 5, dadurch gekennzeichnet, daß die Druckfeder (29) durch Wahl ihrer Länge oder durch eine Vorspannung derart begrenzt wird, daß sie nur von einer durch die normale Arbeitsstellung der Maschine definierten Mittellage des Teleskopgestänges (17, 18) in Richtung auf das Zusammenschieben des Teleskopgestänges (17, 18) wirksam wird.

8. Schwenkvorrichtung nach den Ansprüchen 4 - 6, dadurch gekennzeichnet, daß die Teleskopstange (28) von einer durch die normale Arbeitsstellung der Maschine definierten Mittellage des Teleskopgestänges (18, 28) ab außerhalb der Büchse (27) zu ihrem freien Ende hin einen geringeren Druchmesser (d) aufweist, als innerhalb der Büchse (27) und zu dem mit dem Maschinengestell (4) verbundenen Ende hin.

## Claims

1. A pivoting arrangement for an agricultural working machine which is provided with at least one support wheel and which can be pivotably connected to the three-point suspension of a tractor by way of a carrier frame and whose machine frame structure in the working position of the machine is freely pivotable on the carrier frame about a substantially vertical axis and a horizontal axis disposed transversely to the direction of travel and can be automatically fixed in a position of being oriented in the direction of travel in the raised transportation position after pivotal movement about the horizontal axis by way of stop members arranged on the machine frame structure by virtue of said stop members bearing against complementary stop members on the carrier frame, wherein connected between the machine frame structure and the carrier frame symmetrically relative to the longitudinal centre line are two coupling bars of variable length, the lengthwise mobility of which is restricted by friction brakes, characterised in that the friction brakes (26, 27) on each coupling bar (17, 18) are operative only in a direction towards compression of the coupling bars (17, 18) while they permit almost unbraked lengthwise movement in the opposite direction.

2. A pivoting arrangement according to claim 1 characterised in that arranged in parallel or coaxial relationship with the coupling bars (17, 18) are compression springs (29) which oppose compression of the coupling bars (17, 18).

3. A pivoting arrangement according to claims 1 and 2 characterised in that the compression spring (29) bears with one end against a friction brake (17, 26, 27) in such a way that the braking action thereof is increased with rising spring stressing.

4. A pivoting arrangement according to claims 1 to 3 characterised in that the coupling bars are in the form of a telescopic linkage (17, 18) in which one end (26) of the telescopic sleeve (18) is enlarged in a funnel configuration while the telescopic bar (17) is cylindrical and that fitted into the funnel (26) of the telescopic sleeve (18) is a slit or two-part, externally conical bush (27) which is provided with a cylindrical bore and which is pressed into the funnel (26) by the force of a spring (29) and through which the telescopic bar (17) passes.

5. A pivoting arrangement according to claim 4 characterised in that the spring (29) is used for pressing in the bush (27), which spring in turn resists compression of the telescopic linkage (17, 18).

6. A pivoting arrangement according to claim 4 characterised in that a compression spring (33) is used for pressing in the bush (27), which spring is supported on the one hand against the end face of the bush (27) and on the other hand against a bridge (32) which is fixedly connected to the telescopic sleeve (18).

7. A pivoting arrangement according to claims 1 to 5 characterised in that the compression spring (29) is so restricted by the choice of its length or by a prestressing effect that it becomes operative in the direction towards compression of the telescopic linkage (17, 18), only from a central position of the telescopic linkage (17, 18), that is defined by the normal working position of the machine.

8. A pivoting arrangement according to claims 4 to 6 characterised in that from a central position of the telescopic linkage (18, 28) that is defined by the normal working position of the machine, the telescopic bar (28) is of a smaller diameter (d) outside the bush (27) towards the free end thereof than within the bush (27) and towards the end connected to the machine frame structure (4).

## Revendications

1. Dispositif de pivotement pour une machine de travail agricole comprenant au moins une roue de support et pouvant être raccordée de façon articulée par un châssis porteur à l'attelage à trois points d'un tracteur, dont le châssis de machine peut pivoter librement dans la position de travail de la machine sur le châssis porteur autour d'un axe sensiblement vertical et d'un axe horizontal orienté transversalement à la direction de la marche, et qui peut être fixée dans la position de transport relevée après pivotement autour de l'axe horizontal par l'intermédiaire d'organes de butée disposés sur elle et venant en appui sur des organes de butée complémentaires du châssis porteur automatiquement dans une position orientée dans la direction de la marche, deux tiges d'accouplement de longueur modifiable étant incorporées entre le châssis de machine et le châssis porteur symétriquement par rapport à l'axe longitudinal médian, tiges dont la possibilité de mouvement en longueur est limitée par des freins à friction, caractérisé en ce que les freins à friction (26, 27) ne sont actifs sur chaque tige d'accouplement (17, 18) qu'en direction d'un emboîtement mutuel des tiges d'accouplement (17, 18), alors qu'ils admettent un déplacement en longueur pratiquement non freiné dans la direction inverse.

2. Dispositif de pivotement selon la revendication 1, caractérisé en ce que des ressorts de pression (29) sont incorporés parallèlement ou coaxialement aux tiges d'accouplement (17, 18), qui s'opposent à l'emboîtement mutuel des tiges d'accouplement (17, 18).

3. Dispositif de pivotement selon les revendications 1 et 2, caractérisé en ce que les ressorts de pression (29) s'appuient par une extrémité contre un frein à friction (17, 26, 27) de manière que son effet de freinage soit renforcé à mesure que la tension du ressort augmente.

4. Dispositif de pivotement selon les revendications 1 à 3, caractérisé en ce que les tiges d'accouplement sont constituées sous forme de tiges télescopiques (17, 18) dont une extrémité (26) du manchon télescopique (18) est élargie en forme d'entonnoir alors que la tige télescopique (17) est cylindrique, et en ce que dans l'entonnoir (26) du manchon télescopique (18) est introduite une douille (27) fendue ou en deux parties, de forme externe conique et munie d'un alésage cylindrique, qui est pressée sous l'effet d'un ressort (29) dans l'entonnoir (26) et qui est traversée par la tige télescopique (17).

5. Dispositif de pivotement selon la revendication 4, caractérisé en ce que pour exercer une pression et enfoncer la douille (27), on utilise le ressort (29) qui s'oppose de son côté à l'emboîtement mutuel de la tige télescopique (17, 18).

6. Dispositif de pivotement selon la revendication 4, caractérisé en ce que pour presser la douille (27), on utilise un ressort de pression (33) qui s'appuie d'une part contre la surface frontale de la douille (27) et d'autre part contre un pont (32) relié fermement au manchon télescopique (18).

7. Dispositif de pivotement selon les revendications 1 à 5, caractérisé en ce que le ressort de pression (29) est limité par le choix de sa longueur ou par une précontrainte de manière qu'il ne soit actif qu'à partir d'une position centrale de la tige télescopique (17, 18) définie par la position de travail normale de la machine en direction de l'emboîtement mutuel de la tige télescopique (17, 18).

8. Dispositif de pivotement selon les revendications 4 à 6, caractérisé en ce que la tige télescopique (28) présente à partir d'une position centrale définie par la position de travail normale de la machine et à partir de la douille (27) en direction de son extrémité libre un diamètre plus petit (d) qu'entre l'intérieur de la douille (27) et l'extrémité qui est reliée au châssis (4) de la machine.
